# FASCICULE DE BREVET EUROPEEN

(11) **EP 2 501 735 B1**
(45) Date de publication et mention de la délivrance du brevet: **27.01.2016**
(21) Numéro de dépôt: 10799087.1
(22) Date de dépôt: 19.11.2010
(51) Int. Cl.: C08G 8/04

(54) **NOUVELLES RESINES DE TYPE PHENOPLASTES OBTENUES A PARTIR DE COMPOSES PHENOLIQUES ET DE DURCISSEURS MACROMOLECULAIRE PORTANT DES FONCTIONS ALDEHYDES**
NEUE KUNSTSTOFFPHENOLHARZE AUS PHENOLVERBINDUNGEN UND MAKROMOLEKULARE HÄRTER MIT ALDEHYDFUNKTIONEN
NOVEL PHENOLIC PLASTIC RESINS OBTAINED FROM PHENOLIC COMPOUNDS AND MACROMOLECULAR HARDENERS HAVING ALDEHYDE FUNCTIONS

(30) Priorité: 20.11.2009 FR 0905594
(43) Date de publication de la demande: 26.09.2012
(73) Titulaire: Centre National de la Recherche Scientifique (CNRS), 75016 Paris (FR); Ecole Nationale Supérieure de Chimie de Montpellier, 34296 Montpellier (FR); Université Montpellier 2 Sciences et Techniques, 34095 Montpellier Cedex 5 (FR)
(72) Inventeur: CAILLOL, Sylvain, F-34090 Montpellier (FR); BOUTEVIN,Bernard, F-34090 Montpellier (FR); DAVID, Ghislain, F-34080 Montpellier (FR); BURGUIERE, Carine, F-34160 Castries (FR)
(74) Mandataire: Blot, Philippe Robert Emile
(86) Numéro de dépôt international: PCT/FR2010/052465
(87) Numéro de publication internationale: WO 2011/061456

(56) Documents cités:
- FR-A- 581 705
- GB-A- 972 094
- PIZZI ET AL.: "Formaldehyde-free Aminoresin Wood Adhesives Based on Dimethoxyethanal", JOURNAL OF APLLIED POLYMER SCIENCE, vol. 110, 2008, pages 3908-3916, XP002628171, cité dans la demande
- A. Tejado ET AL: "Lignins for phenol replacement in novolac-type phenolic formulations. II. Flexural and compressive mechanical properties", Journal of Applied Polymer Science, vol. 107, no. 1, 5 January 2008 (2008-01-05), pages 159-165, XP055196945, ISSN: 0021-8995, DOI: 10.1002/app.27003
- PEREZ J M ET AL: "Cure kinetics of lignin-novolac resins studied by isoconversional methods", THERMOCHIMICA ACTA, ELSEVIER SCIENCE PUBLISHERS, AMSTERDAM, NL, vol. 487, no. 1-2, 10 April 2009 (2009-04-10), pages 39-42, XP025970500, ISSN: 0040-6031, DOI: 10.1016/J.TCA.2009.01.005 [retrieved on 2009-01-20]

## Description

Le domaine de la présente invention est celui de l'utilisation d'un polymère portant des fonctions aldéhydes comme durcisseur de phénols pour obtenir des résines de type phénoplastes. La présente invention concerne plus particulièrement l'utilisation d'un polymère portant des fonctions aldéhydes, et non l'utilisation de formaldéhyde, pour la réticulation de composés phénoliques. Le polymère portant des fonctions aldéhydes, décrit dans la présente invention, est obtenu par polymérisation de l'acroléine ou par oxydation d'un polyol. L'invention est ainsi relative à une résine phénolique, destinée à être utilisée massiquement ou dans une composition d'encollage pour fibres minérales ou végétales. Cette résine résulte de la condensation, en présence d'un catalyseur basique, d'un polymère portant des fonctions aldéhydes, de composés phénoliques, d'amine et d'urée.

L'élaboration d'un composé macromoléculaire portant des fonctions aldéhydes a pour but de s'affranchir de l'utilisation de composés moléculaire à fonction aldéhyde pour réduire la volatilité et la toxicité du durcisseur aldéhyde.

Les phénoplastes sont des matières thermodurcissables obtenues par polycondensation d'un phénol et d'un aldéhyde avec élimination d'eau et formation d'un réseau tridimensionnel. Le phénol et le formol sont les deux produits de base de loin le plus couramment utilisés, mais certains phénols substitués (crésol, résorcinol, etc.) peuvent conduire à des résines particulières. Le Belge Léo Baekeland fit, en 1907, aux États-Unis l'étude systématique de la polycondensation du phénol et du formol en fonction du pH et du rapport molaire des deux réactifs. Il eut le mérite de modifier les propriétés du condensat obtenu, généralement désigné sous le nom de résine, par adjonction de charges et d'en prévoir les utilisations. Ainsi, les phénoplastes sont utilisés par de nombreuses industries sous forme de résines (liquides, en solution et solides), de matières à mouler, de semi-produits ou de composites. Les applications dans les domaines exigeant une bonne tenue en température, un comportement au feu satisfaisant ainsi qu'une faible émission de fumées tendent à se développer, par exemple celles des composites dans les transports.

Les résines phénoliques sont bien connues pour leur utilisation dans la préparation des liants pour produits à base de fibres de verre, comme les isolants thermiques et acoustiques, les mats de fibres de verre de renforcement et les panneaux de circuits imprimés. Par exemple, le brevet US-A-3 932 334 décrit des résols phénol-formaldéhyde qui sont simultanément solubles dans l'eau et thermodurcissables, de même que des systèmes liants à base de ces résols à utiliser pour lier des fibres de verre en vue de fabriquer des produits tels que des nappes isolantes. Typiquement, pour la préparation du liant, d'autres composants tels que d'autres résines, des monomères et des additifs sont également ajoutés en plus de la résine phénol-formaldéhyde soluble dans l'eau. Des proportions sensibles de résines azotées, comme les résines urée-formaldéhyde et mélamine-formaldéhyde, et/ou de monomères tels que l'urée, la mélamine et le dicyanodiamide, qui sont condensables avec les résines phénol-formaldéhyde, peuvent être ajoutés. Typiquement, après l'application du liant sur les fibres de verre, un apport de chaleur volatilise le solvant aqueux et durcit le liant.

Ces résines sont obtenues par condensation de phénol et de formaldéhyde, en présence d'un catalyseur basique, dans un rapport molaire formaldéhyde/phénol généralement supérieur à 1 de manière à favoriser la réaction entre le phénol et le formaldéhyde et à diminuer le taux de phénol résiduel dans la résine. La teneur résiduelle en formaldéhyde et en phénol dans la résine demeure élevée.

Actuellement un des grands enjeux de la chimie est de substituer certaines molécules de grande diffusion présentes dans les matériaux pour contact alimentaire comme le bisphénol A ou dans l'atmosphère intérieur de « boîtes à vie » (transport, résidentiel, tertiaire...) comme le formaldéhyde.

Le formaldéhyde est ainsi un exemple de substance extrêmement préoccupante figurant sur la liste syndicale de substances prioritaires du règlement REACh. Il est principalement utilisé pour la fabrication de différents types de résines (urée-, phénol- and mélamine-formaldéhyde) pour le secteur du bois et du papier, dans la production de plastiques, de matériaux d'enrobage et dans l'industrie de la finition textile. Il est également utilisé comme désinfectant et conservateur dans de nombreuses applications. La production mondiale de formaldéhyde est d'environ 21 millions de tonnes par an. Les expositions professionnelles au formaldéhyde concernent donc une large variété de métiers et d'industries - plus d'un million de travailleurs européens sont exposés au formaldéhyde, dont 200.000 en France. Le formaldéhyde est classé cancérogène de catégorie 1 (cancérogène pour l'homme) par le CIRC (Centre International de Recherche sur le Cancer) et reste classé cancérogène de catégorie 3 avec la phrase de risque R 40 au niveau européen.

S'agissant du cahier des charges que l'on souhaite obtenir pour accéder à des résines thermodurcissables exemptes de formaldéhyde, il est particulièrement exigeant et comprend, notamment, la spécification suivante :

La spécification recherchée serait que les résines phénoplastes soient élaborées à partir de durcisseurs exempts de formaldéhyde libre ou libéré lors de la mise en oeuvre ou de l'utilisation.

Les propositions techniques antérieures, décrites infra, ont tenté de satisfaire à certains de ces enjeux. A titre d'illustration on citera les propositions antérieures, concernant tout d'abord l'élimination du formaldéhyde (a) à (r) :
(a) : Le brevet EP0148050 décrit l'ajout dans la résine d'une quantité suffisante d'urée qui réagit avec le formaldéhyde libre en formant des condensats urée-formaldéhyde pour réduire la quantité de formaldéhyde résiduel. La résine obtenue renferme des condensats de phénol-formaldéhyde et d'urée-formaldéhyde, présente un taux de formaldéhyde libre et de phénol libre, exprimé en poids total de liquide, inférieur ou égal à 3 % et 0,5 %, respectivement, et a une diluabilité à l'eau au moins égale à 1000 %. Si la quantité de phénol résiduel est acceptable, en revanche la quantité de formaldéhyde résiduel est trop élevée pour satisfaire les contraintes réglementaires actuelles.
(b) : Dans EP0480778, il a été proposé de substituer une partie de l'urée par une amine qui réagit avec le phénol et le formaldéhyde libres selon la réaction de Mannich pour former un produit de condensation ayant une stabilité thermique améliorée. Le taux de phénol et de formaldéhyde libres de cette résine est inférieur ou égal à 0,20 % et inférieur ou égal à 3 %, respectivement. La présente invention a pour objet une résine phénolique qui présente des caractéristiques suffisantes pour pouvoir être utilisée dans une composition d'encollage pulvérisable et qui a une capacité faible à produire des émissions indésirables, notamment qui présente un faible taux de formaldéhyde et de phénol libres et génère peu de formaldéhyde au cours de son utilisation.
(c) : Le brevet US5030507 décrit un liant à base de copolymère sans formaldéhyde préparé à partir d'une émulsion d'acide (méth)acrylique, de styrène, d'acrylonitrile ou d'acétate de vinyle et d'un isocyanate.
(d) : Le brevet US6426121 envisage l'utilisation de durcisseur polyaldéhyde mais ne décrit en réalité que l'utilisation de dialdéhyde téléchéliques, le glyoxal et le glutaraldéhyde. Or ces deux composés sont toxiques voire sensibilisants.
(e) : Le brevet US05532330 concerne un procédé d'élaboration de liants à base de tanins sans formaldéhyde mais avec de la silice SiO2 comme agent de couplage.
(f) : Le brevet US6043350 concerne un procédé d'élaboration de liants à base de tanins et de paraformaldéhyde et de sels d'ammonium.
(g) : Le brevet EP0896008 concerne la composition de liant contenant des tanins d'écorce de pin et/ou de noix de pécan, du paraformaldéhyde et un sel d'ammonium d'un acide faible. Les formulations servent notamment de liant pour des panneaux de particules à résistance élevée à la traction transversale, à bonne résistance à l'eau et à faible émission de formaldéhyde.
(h) : Les articles de Pizzi et aⁱ,ⁱⁱ.concernent l'élaboration de résines à partir de tanins et de substituts du formaldéhyde et en particulier le dimethoxyéthanal, l'acétaldéhyde ou le glyoxal. Mais la réactivité est bien inférieure à l'utilisation du formaldéhyde et des problèmes de toxicité demeurent.
(i) : Le brevet US3254038 concerne un procédé d'élaboration de liants à base de tanins, de résine phénolique et d'un hydroxyde de métal alcalin.
(j) : Le brevet EP0544927 concerne un procédé d'élaboration d'une composition adhésive comprenant un isocyanate, une résine phénol-formaldéhyde et un tanin. Cette composition est utile pour la fabrication de contre-plaqué utilisable en extérieur.
(k) : Le brevet EP0648807 concerne l'élaboration de liants à base de tanins et de « weakly acid coumpounds ». Ces nouveaux liants sont durcissables à température élevée et compatibles avec des matériaux cellulosiques. Ils conviennent pour la fabrication de matériaux dérivés du bois tels que des panneaux de particules.
(l) : Le brevet EP0639608 concerne des liants thermodurcissants à base de tanin et d'une substance qui libère du formaldéhyde sous l'action de la chaleur. Ils sont destinés aux matériaux cellulosiques.
(m) : Le brevet US2590760 concerne l'élaboration de résines à base de tanin, d'acide sulfurique, d'acétone et de cyanure de potassium.
(n) : Le brevet US3177163 concerne l'élaboration de résines à base d'écorce de bois contenant des tanins, d'urée et de formaldéhyde.
(o) : Le brevet US4045386 concerne une formulation de liants à base d'une solution alcaline d'écorce contenant des tanins et d'un aldéhyde.
(p) : Le brevet US7452442 concerne un procédé d'élaboration de liants pour bois à base d'une résine amino-mélaminique et d'une résine phénolique à base de tanin.
(q) : Le brevet WO058843 concerne une formulation de liants à base d'un tanin, d'un composé amine (urée, monométhylol urée ou diméthylol urée), d'un aldéhyde (formaldéhyde, paraformaldéhyde ou acétaldéhyde).
(r) : Le brevet WO02007060237 propose des formulations phénoplastes classiques contenant d'autres additifs (amine, phénol ou résorcinol) susceptibles de bloquer les traces de formol libre.

Il ressort de ce qui précède que les propositions techniques antérieures sus décrites, satisfont incomplètement à la spécification du cahier des charges indiqué supra, et, en particulier pour ce qui concerne l'élaboration de résines phénoplastes thermodurcissables sans formaldéhyde. Par ailleurs ces propositions ne font aucunement apparaître l'élaboration de résines phénoplastes à l'aide de durcisseur macromoléculaire portant des fonctions aldéhyde.

Il ressort également de ces travaux que la réactivité du formol est toujours très supérieure à tous les autres aldéhydes moléculaires connus (éthanal, glyoxal, dialdéhydes, furfural...).

Dans cet état de fait, un objectif essentiel est de pouvoir fournir de nouvelles solutions d'élaboration de résines phénoplastes thermodurcissables sans formaldéhyde libre.

Cet objectif est atteint par la présente invention qui concerne l'utilisation d'un durcisseur macromoléculaire portant des fonctions aldéhydes dans l'élaboration de résines phénoplastes avec des composés phénoliques. Ce durcisseur macromoléculaire portant des fonctions aldéhydes est obtenu, sans utilisation de formaldéhyde, par polymérisation de l'acroléine ou par oxydation ménagée d'un polyol, d'origine naturelle ou de synthèse.

De façon tout à fait inattendue, compte tenu de la réactivité des aldéhydes, il a été trouvé que les durcisseurs macromoléculaires portant des fonctions aldéhydes sont susceptibles de réagir beaucoup plus vite que les autres aldéhydes.

Le polymère portant des fonctions aldéhydes utilisés comme durcisseur de composés phénoliques peut être obtenu selon deux voies : la polymérisation de l'acroléine ou l'oxydation ménagée d'un polyol.

L'acroléine peut être obtenue par réduction catalytique du glycérol, composé naturel issu de la biomasse oléagineuse. Nous avons donc polymérisé l'acroléine pour synthétiser un poly(acroléine) portant des fonctions réactives aldéhyde.

L'acroléine est un monomère très réactif qui peut polymériser par voie anionique, cationique ou radicalaireⁱⁱⁱ. Les caractéristiques des polymères synthétisés par ces différentes méthodes sont très variables. La polymérisation radicalaire mobilise exclusivement la fonction vinylique par addition 1-2, alors que les polymérisations ioniques se produisent principalement par l'addition 3-4 sur le groupement carbonyle. La troisième possibilité d'addition 1-4 est moins fréquemment rencontrée. Ces enchaînements sont résumés par le Schéma 1.

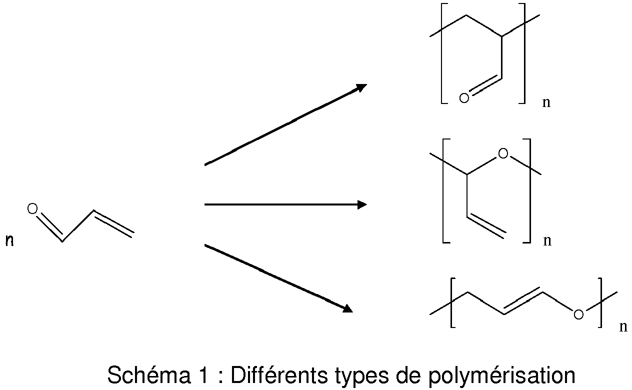

### Polymérisation Radicalaire

La polymérisation radicalaire conventionnelle de l'acroléine conduit à un polymère possédant des groupements aldéhyde pendants, qui forment spontanément des acétals et des hydrates par condensation inter et intramoléculaire. Ces polymères sont infusibles et insolubles dans l'eau et les solvants organiques.

### Polymérisation Ionique

La polymérisation ionique de l'acroléine mobilise principalement la fonction carbonyle, mais les additions sur la fonction vinylique et sur les deux groupements fonctionnels se produisent également. Du fait de l'espacement entre les fonctions aldéhyde pendantes, la condensation n'a pas lieu, les problèmes de solubilité ne se posent pas et les polymères, représentés par le Schéma 2, sont solubles dans l'eau et les solvants organiques. Il est à noter que le rapport m/n peut être modifié, notamment en jouant sur la température de réaction, la polarité du solvant ou la force de la base.

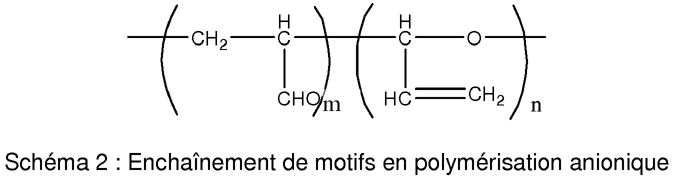

La polymérisation anionique peut très simplement être amorcée par tous les amorceurs utilisés communément en polymérisation anionique mais on peut tout simplement utiliser la soude dans l'eau et à température ambiante^{iv}.

L'acroléine est donc homopolymérisée par polymérisation anionique dans l'eau. La polymérisation est effectuée dans l'eau à 0°C, amorcée par une base forte comme la soude. Le polymère obtenu reste soluble dans l'eau.

Nous avons mis au point une voie d'accès à un oligomère portant des fonctions aldéhydes pendantes par oxydation ménagée d'un oligomère portant des fonctions alcool (Schéma 3). L'oligomère de départ peut également être issu de ressources renouvelables. En effet, il existe de nombreuses voies d'accès à des polyols à partir de la biomasse (huile, glycérol...). Il s'agit donc de préparer des polyols (2 à 20 groupes hydroxy) ou d'utiliser des polyols naturels et de les oxyder de façon ménagée pour obtenir des aldéhydes.

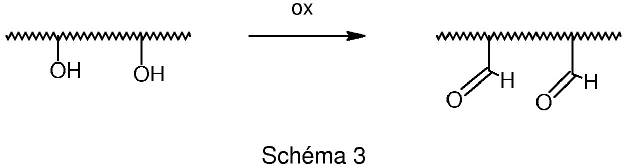

Parmi les polyols on peut citer les poly(allyl alcool), les poly(hydroxy ethyl acrylate), les polyethers (hydroxyethylvinylether jusqu'à hydroxybutylvinylether). On peut aussi utiliser des polyéthers tels que les α-ω dihydroxypolyethers (polyglycerol, polyethyleneglycol).

L'oxydation du polyol est réalisée dans l'eau, à 0°C, avec un oxydant. Le polymère obtenu est soluble dans l'eau et porte des fonctions aldéhyde pendantes.

L'oxydation ménagée d'alcools primaires en leurs dérivés carbonylés correspondants est une réaction de choix de la synthèse organique, qui a fait l'objet d'une attention toute particulière dans la littérature, menant à la mise au point de nombreux procédés.

On distinguera notamment, parmi les méthodes les plus fréquemment utilisées en laboratoire, l'oxydation de Swern^{v} et l'une de ses variantes, l'oxydation de Corey-Kim^{vi}. Ces méthodes font intervenir du DMSO activé par un réactif électrophile tel que le chlorure d'oxalyle et sont effectuées en suivant un protocole bien précis compte tenu du risque d'explosion lié à la formation d'espèces réactives instables lors de la synthèse.

Afin de s'en affranchir et pour palier également à l'utilisation de réactifs toxiques et onéreux, des méthodes catalytiques plus récentes ont été développées en mettant à profit le pouvoir oxydant de radicaux nitroxydes^{vii} tel que le TEMPO. Dans ce cas l'oxydation se déroule le plus souvent en milieu aqueux, à température ambiante, avec seulement 1% molaire (voir moins) de TEMPO, en présence d'un hypohalite (ex : NaOCl) comme co-catalyseur et nécessite des temps de réaction relativement courts.

Pour élaborer des résines de type phénoplaste, les durcisseurs portant des fonctions aldéhydes sont mélangés avec des composés phénoliques. Ces composés phénoliques peuvent être d'origine synthétique ou naturelle.

L'invention concerne également les réactifs suivants : composés phénoliques naturels, qui sont généralement subdivisés en phénols simples, acides-phénols (dérivés de l'acide benzoïque ou cinnamique) et coumarines, en naphtoquinones, en stilbénoïdes (deux cycles C6 liés par 2C), en flavonoïdes, isoflavonoïdes et anthocyanes (structure C6-C3-C6) et en formes polymérisées : lignanes, lignines, tanins condensés et tanins hydrolysables. Ces squelettes carbonés de bases sont issus du métabolisme secondaire des plantes, élaborés par la voie du shikimate. Ce sont des molécules contenant au moins un cycle benzénique et des groupes hydroxyles.

| **Composés phénoliques** | | | | |
|---|---|---|---|---|
| **Squelette carboné** | **Classe** | **Exemple** | **Formule** | **Origine** |
| **C6** | Phénols simples | Hydroquinone | 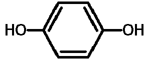 | Busserole |
| **C6** | Phénols simples | Résorcinol | 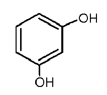 | Bois |
| **C6** | Phénols simples | Phloroglucinol | 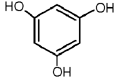 | Algues brunes |
| **C6-C1** | Acides hydroxybenzoïques | Acide p-hydroxybenzoïque | 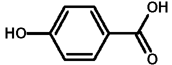 | Epices, fraises |
| **C6-C1** | Acides hydroxybenzoïques | Acide gallique | 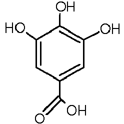 | Raisin |
| **C6-C3** | Acides hydroxycinnamiques | acide p-coumarique | 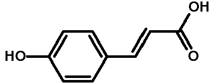 | Tomates, aïl |
| | Coumarines | Ombelliférone | 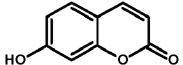 | Carottes, coriandre |
| **C6-C4** | Naphtoquinones | Juglone | 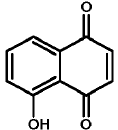 | Noix |
| **C6-C2-C6** | Stilbénoïdes | trans-resvératrol | 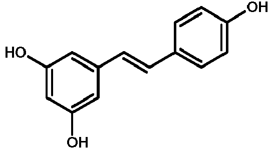 | Raisin |
| | Flavonoïdes | Kaempférol | 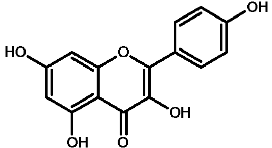 | Fraises |
| **C6-C3-C6** | Isoflavonoïdes | Daidzéine | 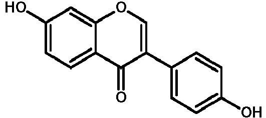 | Graines de soja |
| | Anthocyanes | Delphinidol | 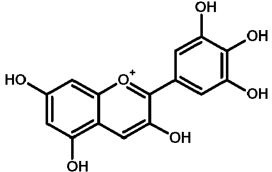 | Raisin Cabernet-Sauvignon |
| **(C6-C3)₂** | Lignanes | Entérodiol | 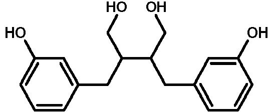 | Bactéries intestinales |
| **(C6-C3)ₙ** | Lignines | | 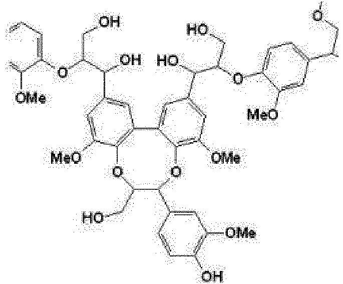 | Bois, fruits à noyaux |
| **(C6-C3-C6)ₙ** | Tanins condensés | Procyanidine | 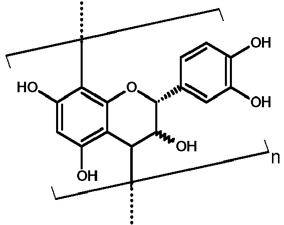 | Pommes |
| | Tanins hydrolysables | Gallotanins | 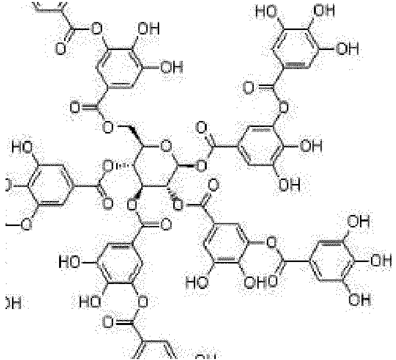 | Chêne |

Ce tableau s'inspire de Macheix et als. dans Sarni-Manchado et Cheynier (2006)^{viii}, ainsi que de Bruneton (1999)^{ix} mais n'est pas exhaustif et n'est pas limitatif des phénols utilisables.

Les formes polymérisées des composés phénoliques pourront être dépolymérisées avant utilisation. En particulier, les tanins condensés (ou proanthocyanidines) sont dépolymérisés à chaud en milieu alcoolique en présence d'acide et d'un réactif nucléophile (^{x, xi, xi, xiii, xiv}). Ce réactif nucléophile réagit sur les unités supérieures et unités d'extension, qui ont été libérées sous forme de carbocations par rupture acido-catalysée des liaisons interflavaniques (Schéma 4). Le réactif nucléophile est un composé possédant une fonction thiol (comme par exemple le toluène α-thiol, l'acide thioglycolique, la cystéine ou la cystéamine) soit un composé phénolique mono-aromatique tel que le phloroglucinol ou le résorcinol. Ainsi, les unités constitutives des chaines polymériques se retrouvent, après réaction de dépolymérisation, soit sous formes de monomères libres lorsqu'elles étaient initialement en position terminale (extrémité inférieure), soit sous forme de monomères substitués (dérivés thioéthers ou d'un composés phénolique) lorsqu'elles étaient initialement en position intermédiaire ou extrémité supérieure.

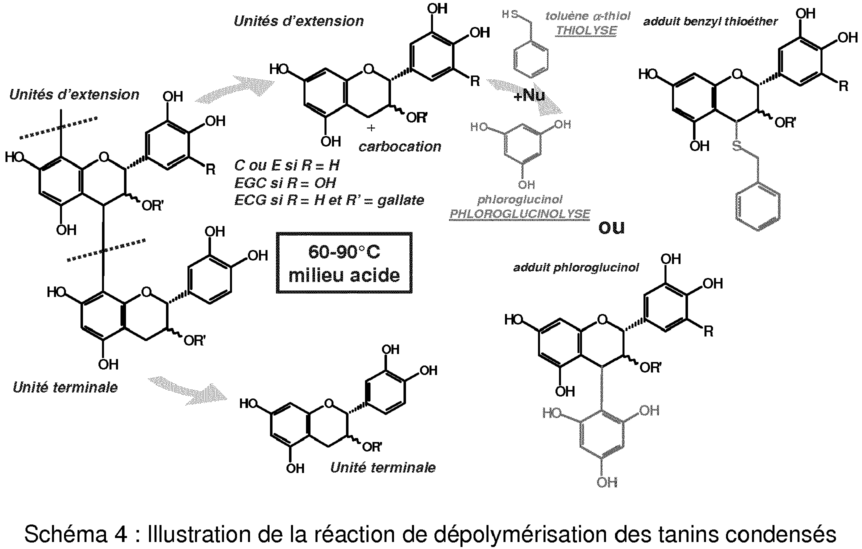

L'un des fondements inventifs de ces nouvelles résines phénoplastes est d'utiliser un polymère portant des fonctions aldéhydes réactives comme durcisseur. Le polymère correspond à une chaîne macromoléculaire de degré de polymérisation supérieur à deux, portant au moins deux fonctions aldéhydes.

Un autre avantage remarquable de la voie sélectionnée est qu'elle n'utilise pas de formaldéhyde.

Le fait que la voie sélectionnée permette de durcir des composés phénoliques naturels constitue également une caractéristique innovante.

La présente invention a également pour objet une résine de type phénoplaste susceptible d'être obtenue par le procédé de l'invention décrit ci-dessus, dans lequel les composés phénoliques sont choisis parmi les acides-phénols, coumarines, naphtoquinones, stilbénoïdes, flavonoïdes, isoflavonoïdes, anthocyanes, lignanes, tanins condensés et tanins hydrolysables.

### EXEMPLES

Les exemples suivant servent à illustrer l'invention sans aucunement en limiter la portée.

### 1- Synthèse d'un polymère portant des fonctions aldéhydes par polymérisation de l'acroléine

Dans un réacteur de 200 ml équipé d'un système d'agitation, d'un condenseur, d'un thermomètre et d'une entrée pour réactifs, maintenu à 0°C, on ajoute 56,0 g d'acroléine (1 mole) dans 150ml d'eau. On ajoute 3g de soude en solution aqueuse à 50% (soit 0,03mole).

Le mélange est laissé à 0°C sous agitation pendant 10h. Puis l'eau est évaporé et le polymère est récupéré et analysé.

L'identification des motifs aldéhyde par spectrométrie RMN ¹H fait apparaître un ratio CHO/C=C de 1/5.

Le polymère obtenu a été caractérisé par chromatographie d'exclusion stérique dans le tétrahydrofurane THF en utilisant une calibration polyméthacrylate de méthyle PMMA. Les masses molaires Mn obtenues sont de l'ordre de 1700 g/mol, avec un indice de polymolécularité lp=2,9.

### 2- Synthèse d'un polymère portant des fonctions aldéhydes par oxydation ménagée d'un polyol

A une solution du polyol (20 mmol en alcool primaire) et de 2,2,6,6-tetra-methylpiperidine-N-oxyl TEMPO (0.01 équiv. Mol.) dans 40 mL de dichlorométhane est ajouté 0.1 équiv. mol. de bromure de potassium dissout dans 5 mL d'eau. Le milieu réactionnel est ensuite refroidit à 0°C puis 1.3 équiv. Mol. d'une solution d'hypochlorite de sodium (0.35 M) tamponnée à pH 9 (par l'addition d'hydrogénocarbonate de sodium) est introduite. L'agitation est maintenue à 0°C pendant une heure puis la phase organique est lavée par de l'eau (jusqu'à neutralité des eaux de lavage), séchée sur Na₂SO₄, filtrée et évaporée à sec afin d'obtenir le polymère portant des fonctions aldéhyde correspondant.

Le polymère obtenu a été caractérisé par chromatographie d'exclusion stérique dans le THF en utilisant une calibration PMMA. Les masses molaires Mn obtenues sont de l'ordre de 1800 g/mol, avec un indice de polymolécularité lp=2,1

### 3- Elaboration d'une résine phénoplaste

Dans un réacteur de 250 ml équipé d'un système d'agitation, d'un condenseur, d'un thermomètre et d'une entrée pour réactifs, on ajoute 56,4 g de phénol (0,6 moles de phénol) à 306,0 g de durcisseur polymère portant des fonctions aldéhydes de l'exemple 1 (0,9 moles d'aldéhyde) en solution aqueuse à 37 %, pour avoir un rapport molaire A/P égal à 1,5.

Le mélange est porté à 45°C sous agitation, puis on introduit régulièrement en 30 minutes, en maintenant la température à 45°C, 2,6 g de soude en solution aqueuse à 50 % (soit 11 moles OH - pour 100 moles de phénol initial).

On élève ensuite la température de façon régulière de 45 à 70°C en 30 minutes et on la maintient à 70°C pendant 80 minutes, jusqu'à ce que le taux de conversion du phénol soit de 93 %.

Puis, on commence à refroidir régulièrement le mélange ; on ajoute progressivement pendant les 30 premières minutes, la diéthanolamine (14,1 g soit 25 % en poids, par rapport au poids du phénol). A la fin de l'addition de l'amine, la température est de 60°C environ. Pendant les 15 minutes qui suivent la fin de l'introduction de l'amine, comme la réaction est exothermique, on maintient la température du milieu réactionnel à 60°C. Puis, on continue à refroidir le mélange. Lorsque la température du mélange réactionnel atteint 25°C environ, après 30 mn environ, on ajoute de l'acide sulfurique en solution à 20 %, en 60 minutes, de manière à atteindre un pH de 8,0-8,1. On introduit ensuite progressivement, en 60 minutes, de l'urée en grains (121,1 g soit 35 % en poids par rapport au poids total de la résine exprimé en extrait sec).

La résine se présente sous l'aspect d'une composition aqueuse limpide ayant une diluabilité à l'eau, à 20°C, infinie après plus de 8 jours. Le taux de phénol libre est de 0,8 %. La résine ne contient pas de formaldéhyde libre.
ⁱ Despres A, Pizzi A, Vu C, Pasch H ; Journal of Applied Polymer Science, 2008, 110(6), 3908-3916
ⁱⁱ Pizzi, A.; Rossouw, D. du T.; Daling, G. M. E. Holzforschung und Holzverwertung, 1980, 32(4), 101-103
ⁱⁱⁱ Nuyken O., Handbook of Polymer Science, 337-378
^{iv} Slomkowski S., Progress in Polymer Science, 1998, 23, 815-874
^{v} Mancuso, A. J., Swern, D., Synthesis, 1981, 165
^{vi} Corey, E. J., Kim, C.U., J. Am. Chem. Soc., 1979, 7586
^{vii} Anelli, P. L., Biffi, C., Montanari, F., Quici, S., J. Org. Chem. 1987, 52, 2559-2562
^{viii} P. Sarni-Manchado, V. Cheynier, Les polyphénols en agroalimentaire, Lavoisier, Editions Tec & Doc, 2006, 398
^{ix} Jean Bruneton, Pharmacognosie - Phytochimie, Plantes médicinales, Editions Tec & Doc, Editions médicales internationnales, 1999, p1120
^{x} Kolodziej Phytochemistry ; 1990, 29, 1671-1674
^{xi} Rigaud, J.; Perez-Ilzarbe, X.; RicardodaSilva, J. M.; Cheynier, V. Journal of Chromatography; 1991, 540, 401-405
^{xii} Guyot, S.; Marnet, N.; Laraba, D.; Sanoner, P.; Drilleau, J. F. Journal of Agricultural and Food Chemistry; 1998, 46, 1698-1705
^{xiii} Kennedy, J.; Jones, G. P. Journal of Agricultural and Food Chemistry; 2001, 49, 1740-1746
^{xiv} Torres, J.; Lozano, C. Chromatographia; 2001, 54, 523-526

## Revendications

1. Procédé de préparation d'une résine de type phénoplaste sans formaldéhyde, comprenant les étapes de :
- préparation d'un durcisseur macromoléculaire portant des fonctions aldéhydes par oxydation ménagée d'un polyol,
- réaction de composés phénoliques et dudit durcisseur.

2. Procédé selon la revendication 1, **caractérisé en ce que** le polyol est choisi parmi les polyols naturels.

3. Procédé selon la revendication 1, **caractérisé en ce que** le polyol est choisi parmi les polyols de synthèse.

4. Procédé selon l'une quelconque des revendications 1 à 3, **caractérisé en ce que** le polyol présente de 2 à 20 groupes hydroxy.

5. Procédé selon l'une quelconque des revendications 1 à 4, **caractérisé en ce que** le polyol est choisi parmi les poly(allyl alcool), les poly(hydroxy ethyl acrylate) ou les polyethers.

6. Procédé selon l'une quelconque des revendications 1 à 5, **caractérisé en ce que** le polyol est choisi parmi les polyethers de hydroxyethylvinylether, de hydroxybutylvinylether, les α-ω dihydroxypolyethers, les polyglycerols et les polyethyleneglycols.

7. Procédé selon l'une quelconque des revendications 1 à 6 tel que lesdits composés phénoliques sont d'origine naturelle.

8. Procédé selon l'une quelconque des revendications 1 à 7 tel que lesdits composés phénoliques sont choisis parmi les phénols simples, acides-phénols, coumarines, naphtoquinones, stilbénoïdes, flavonoïdes, isoflavonoïdes, anthocyanes, lignanes, lignines, tanins condensés et tanins hydrolysables.

9. Procédé selon l'une quelconque des revendications 1 à 8, **caractérisé en ce que** l'oxydation ménagée du polyol est effectuée dans l'eau, à 0°C, et en présence d'un oxydant.

10. Procédé selon la revendication 9, **caractérisé en ce que** l'oxydant est le TEMPO (2,2,6,6-tetramethylpipéridinoxyl), accompagné d'un hypohalite.

11. Procédé selon la revendication 10, **caractérisé en ce que** l'hypohalite est l'hypochlorite de sodium (NaOCI).

12. Résine de type phénoplaste susceptible d'être obtenue par le procédé selon l'une quelconque des revendications 1 à 11 dans lequel les composés phénoliques sont choisis parmi les acides-phénols, coumarines, naphtoquinones, stilbénoïdes, flavonoïdes, isoflavonoïdes, anthocyanes, lignanes, tanins condensés et tanins hydrolysables.

## Patentansprüche

1. Verfahren zur Herstellung eines Harzes des Formaldehyd-freien Phenolplast-Typs aufweisend die Schritte :
- Vorbereiten eines makromolekulären Härters, welcher Aldehyd-Funktionen trägt, durch schonende Oxidation eines Polyols,
- Umsetzen von Phenolverbindungen und dem Härter.

2. Verfahren nach Anspruch 1, **dadurch gekennzeichnet, dass** das Polyol ausgewählt aus natürlichen Polyolen ist.

3. Verfahren nach Anspruch 1, **dadurch gekennzeichnet, dass** das Polyol ausgewählt aus synthetischen Polyolen ist.

4. Verfahren nach einem der Ansprüche 1 bis 3, **dadurch gekennzeichnet, dass** das Polyol 2 bis 20 Hydroxy-Gruppen aufweist.

5. Verfahren nach einem der Ansprüche 1 bis 4, **dadurch gekennzeichnet, dass** das Polyol ausgewählt aus Poly(allylalkoholen), Poly(hydroxyethylacrylaten) oder Polyethern ist.

6. Verfahren nach einem der Ansprüche 1 bis 5, **dadurch gekennzeichnet, dass** das Polyol ausgewählt aus Hydroxyethylvinylether-, Hydroxybutylvinylether-Polyethern, α-ω-Dihydroxypolyethern, Polyglycerolen und Polyethylenglykolen ist.

7. Verfahren nach einem der Ansprüche 1 bis 6, wobei die Phenolverbindungen natürlichen Ursprungs sind.

8. Verfahren nach einem der Ansprüche 1 bis 7, wobei die Phenolverbindungen ausgewählt aus einfachen Phenolen, Phenolsäuren, Cumarinen, Naphthochinone, Stilbenoiden, Flavonoiden, Isoflavonoiden, Anthocyanen, Lignanen, Ligninen, kondensierten Tanninen und hydrolysierbaren Tanninen sind.

9. Verfahren nach einem der Ansprüche 1 bis 8, **dadurch gekennzeichnet, dass** die schonende Oxidation des Polyols im Wasser bei 0 °C und in Gegenwart eines Oxidationsmittels durchgeführt wird.

10. Verfahren nach Anspruch 9, **dadurch gekennzeichnet, dass** das Oxidationsmittel TEMPO (2,2,6,6-Tetramethylpiperidinoxyl) mit einem Hypohalogenit ist.

11. Verfahren nach Anspruch 10, **dadurch gekennzeichnet, dass** das Hypohalogenit Natriumhypochlorit (NaOCl) ist.

12. Harz des Phenoplast-Typs, welches durch das Verfahren nach einem der Ansprüche 1 bis 11 erhalten werden kann, wobei die Phenolverbindungen ausgewählt aus Phenolsäuren, Cumarinen, Naphthochinonen, Stilbenoiden, Flavonoiden, Isoflavonoiden, Anthocyanen, Lignanen, Ligninen, kondensierten Tanninen und hydrolysierbaren Tanninen sind.

## Claims

1. A method for preparing a resin of the phenoplast type without any formaldehyde, comprising the steps:
- preparation of a macromolecular hardener bearing aldehyde functions by controlled oxidation of a polyol,
- reaction of phenolic compounds and of said hardener.

2. The method according to claim 1, **characterized in that** the polyol is selected from natural polyols.

3. The method according to claim 1, **characterized in that** the polyol is selected from synthetic polyols.

4. The method according to any of claims 1 to 3, **characterized in that** the polyol has from 2 to 20 hydroxy groups.

5. The method according to any of claims 1 to 4, **characterized in that** the polyol is selected from poly(allyl alcohol), poly (hydroxy ethyl acrylate) or polyethers.

6. The method according to any of claims 1 to 5, **characterized in that** the polyol is selected from polyethers of hydroxyethylvinylether, hydroxybutylvinylether, α-ω-dihydroxypolyethers, polyglycerols and polyethylene glycols.

7. The method according to any of claims 1 to 6, such that the phenolic compounds are of natural origin.

8. The method according to any of claims 1 to 7, **characterized in that** the phenolic compounds are selected from simple phenols, acid-phenols, coumarins, naphthoquinones, stilbenoids, flavonoids, isoflavonoids, anthocyans, lignans, lignins, condensed tannins and hydrolyzable tannins.

9. The method according to any of claims 1 to 8, **characterized in that** the controlled oxidation of the polyol is carried out in water at 0°C and in the presence of an oxidizer.

10. The method according to claim 9, **characterized in that** the oxidizer is TEMPO, (2,2,6,6-tetramethylpiperidinoxyl) accompanied by a hypohalite, such as for example sodium hypochlorite (NaOCI).

11. The method according to claim 10, **characterized in that** the hypohalite is sodium hypochlorite (NaOCI).

12. A resin of the phenoplast type which may be obtained by the method according to any of claims 1 to 11 wherein the the phenolic compounds are selected from acid-phenols, coumarins, naphthoquinones, stilbenoids, flavonoids, isoflavonoids, anthocyans, lignans, lignins, condensed tannins and hydrolyzable tannins.
